# EUROPÄISCHE PATENTSCHRIFT

(11) **EP 2 850 398 B1**
(45) Veröffentlichungstag und Bekanntmachung des Hinweises auf die Patenterteilung: **07.08.2019**
(21) Anmeldenummer: 13713144.7
(22) Anmeldetag: 25.03.2013
(51) Int. Cl.: G01F 1/66, B06B 1/06

(54) **VERFAHREN ZUR HERSTELLUNG EINES ULTRASCHALL-WANDLERKERNS MIT EINGEBETTETEM PIEZOELEKTRISCHEM WANDLERELEMENT**
MANUFACTURING PROCESS OF AN ULTRASOUND TRANSDUCER WITH IMBEDDED PIEZOELECTRIC TRANSDUCER ELEMENT
PROCÉDÉ DE FABRICATION D'UN TRANSDUCTEUR À ULTRASONS AVEC ÉLÉMENT PIÉZOÉLECTRIQUE NOYÉ DANS UNE RÉSINE

(30) Priorität: 16.05.2012 DE 102012208292
(43) Veröffentlichungstag der Anmeldung: 25.03.2015
(73) Patentinhaber: Robert Bosch GmbH, 70442 Stuttgart (DE)
(72) Erfinder: Walther, Jens, 99846 Seebach (DE); Rausch, Heiko, 99880 Waltershausen (DE)
(86) Internationale Anmeldenummer: PCT/EP2013/056303
(87) Internationale Veröffentlichungsnummer: WO 2013/170990

(56) Entgegenhaltungen:
- EP-A1- 0 766 071
- WO-A1-2010/072506
- DE-A1-102007 037 088
- DE-A1-102007 060 989
- DE-A1-102008 027 974

## Beschreibung

### Stand der Technik

Die Erfindung betrifft ein Verfahren zur Herstellung eines Ultraschall-Wandlerkerns mit den Merkmalen gemäß dem Oberbegriff des Anspruchs 1 sowie einen Ultraschall-Wandlerkern gemäß dem Oberbegriff des Anspruchs 3.

Die Erfindung geht aus von Ultraschallwandlern, welche beispielsweise als Durchflussmesser in der Verfahrenstechnik oder im Automobilbereich, insbesondere im Ansaug- und/oder Abgastrakt von Verbrennungsmotoren zur Volumen- oder Massenstrommessung eingesetzt werden oder als Umfeldsensoren, insbesondere im vorderen und/oder hinteren Stoßfänger des Fahrzeugs beispielsweise zum Zwecke der Parkassistenz und/oder Kollisionsvermeidung. Dabei werden typischerweise Ultraschallwandler eingesetzt, welche sowohl Ultraschallwellen in ein fluides Medium, beispielsweise Luft, Gas und/oder eine Flüssigkeit emittieren können, als auch Ultraschallwellen empfangen können. Dabei werden üblicherweise Ultraschallsignale durch das fluide Medium von einem Emitter zu einem Empfänger übermittelt oder von einem Emitter in eine Umgebung übermittelt und von einem in der Umgebung befindlichen Objekt reflektierte Ultraschallsignale erfasst und die Laufzeit und/oder Laufzeitdifferenzen und/oder weitere Größen wie beispielsweise Amplituden und Phasen der Ultraschallsignale gemessen.

Ein Nachteil vieler bekannter Ultraschall-Durchflussmesser liegt zumindest bei gasförmigen Medien im geringen Signalhub, d. h. den geringen Laufzeitveränderungen, die das Verfahren bei kleinen Strömungsraten häufig sehr driftanfällig machen. Dieser Fehler wird auch als "zero flow error" bezeichnet.

Erschwerend kommt hinzu, dass die von einem üblichen Ultraschallgeber, z. B. einer Piezokeramik erzeugte Schwingungsenergie bei der Einkopplung in das zu messende Medium einen hohen akustischen Impedanzunterschied überwinden muss. Infolgedessen werden in der Regel ca. 99,9995% der Schallenergie auf dem Weg von einer Piezokeramik in Luft an der entsprechenden Grenzfläche zurückreflektiert und sind für die Messung nicht nutzbar. Derselbe Reflexionsverlust tritt nochmals beim zweiten, empfangenden Wandler auf, welcher auch mit dem ersten Wandler identisch sein kann.

Um die akustische Kopplung zwischen dem Piezoelement und dem zu messenden Fluid zu verbessern, werden üblicherweise Maßnahmen zur Impedanzanpassung eingesetzt, was jedoch die möglichen Ansätze für die Konstruktion der Ultraschallwandler bereits stark einschränkt. So lassen sich zur Impedanzanpassung beispielsweise Membranen einsetzen, auf die das meist dünne Piezoelement aufgeklebt ist. In diesem Fall wird jedoch die Resonanzfrequenz des Wandlers eher durch die Membran bestimmt als durch das Piezoelement allein.

Auch andere Arten von Anpassschichten sind bekannt, welche auf das Piezoelement aufgebracht werden. Eine Großserien-Fertigung von Luftultraschallwandlern nach den bekannten Prinzipien beinhaltet jedoch aufwändige und teure Prozessschritte. Insbesondere ist in vielen Fällen eine spanende Bearbeitung der Anpassschicht erforderlich, was je nach Werkstofftyp zu rauen Oberflächen führt, die eine akustisch vorteilhafte dünne und reproduzierbare Klebung erschweren. Auch bei einer Fertigung der Anpassschicht ohne spanende Bearbeitung, z. B. in einem Gieß-/Spritzprozess, bleibt die Notwendigkeit eines separaten Klebeprozesses.

Weitere Einschränkungen bezüglich der zu nutzenden Ultraschallfrequenz und des Wandlerdesigns ergeben sich für bekannte Ultraschallwandler aus physikalischen Effekten wie Schallfeldformung im Fluid, Absorption und Dispersion.

Zusätzlich zu diesen Designeinschränkungen kann aus üblichen Zieltoleranzen bei einem Einsatz für eine Strömungsmessung im Ansaugbereich von PKW-Motoren die Anforderung abgeleitet werden, dass der oszillierende Einschwingverlauf des Ultraschallwandlers zumindest im Sinne der differenziellen Laufzeitmessung rein mechanisch immer näherungsweise exakt gleich bleibt, und zwar mit einer Genauigkeit von beispielsweise ca. 1/1000 einer einzelnen mechanischen Schwingung. Dabei gehen in diesen mechanischen Einschwingverlauf neben Wandlergrunddesign und Wandlergeometrie auch entscheidend die inneren Werkstoffeigenschaften und Verbindungen der Werkstoffe untereinander ein. Dadurch ist es schwierig, die bei einer thermischen Strömungsmessung üblichen Toleranzen zu erreichen oder gar zu verbessern.

Nachteilig an bekannten Systemen ist also, dass diese in der Regel vom Design her starken Einschränkungen unterworfen sind. Weiterhin bieten die mechanische Stabilität bekannter Ultraschallwandler und die Signalqualität und die Funktionstoleranzen in vielen Fällen Potenzial für weitere Verbesserungen, und die Herstellung ist zumeist noch zu aufwändig und teuer.

Aus der DE 10 2007 010 500 A1 ist ein Ultraschall-Wandler mit direkt eingebettetem piezoelektrischen Wandlerelement bekannt, bei welchem eine Anpassschicht, die zumindest ein Polymermaterial aufweist, in flüssigem oder verformbaren Zustand mit dem piezoelektrischen Wandlerelement in Kontakt gebracht und ausgehärtet wird. Nachteilig bei einem in der Anpassschicht direkt eingebettetem piezoelektrischen Wandlerelement ist, dass es einen Unterschied in dem Wärmeausdehnungskoeffizienten von piezoelektrischem Wandlerelement und dem Anpasskörper gibt, welcher insbesondere beim Abkühlen und/oder bei mehrmaligen Temperaturwechseln dem Ultraschall-Wandlerkern Probleme bereitet. Ein beispielsweise aus Polymermaterial gefertigter Anpasskörper hat die Eigenschaft, sich stärker auszudehnen und sich auch stärker zusammenzuziehen als eine Piezokeramik und es entstehen dadurch unzulässig hohe plastische Dehnungen bzw. Spannungen und gegebenenfalls Abhebungen des Anpasskörpers vom piezoelektrischen Wandlerelement. In der Praxis können beispielsweise Risse an dem Anpasskörper festgestellt werden und Spalte zwischen dem Anpasskörper und dem piezoelektrischen Wandlerelement. Derartige Spalte können zu einem Totalschaden an dem Ultraschallsensor führen, da infolge der zu überwindenden hohen akustischen Impedanz kaum noch Signale für die Messung nutzbar sind WO2010/072506 und DE110 2007 037 088 A1 offenbaren ein Verfahren gemäß dem Oberbegriff des Anspruchs 1 und einen Ultraschall-Wandlerkern gemäß dem Oberbegriff des Anspruchs 3.

### Offenbarung der Erfindung

### Vorteile der Erfindung

Gemäß einem ersten Aspekt der Erfindung umfasst ein Ultraschall-Wandlerkern mindestens ein piezoelektrisches Wandlerelement und mindestens einen Anpasskörper zur Begünstigung einer Schwingungskopplung zwischen dem piezoelektrischen Wandlerelement und einem umgebenden Medium. Dabei ist vorgesehen, dass der Ultraschall-Wandlerkern mindestens einen Temperaturausdehnungsausgleichskörper aufweist, welcher zumindest eine gemeinsame Grenzfläche mit dem piezoelektrischen Wandlerelement und zumindest eine gemeinsame Grenzfläche mit dem Anpasskörper aufweist. Die dem Anpasskörper abgewandte Seite des piezoelektrischen Wandlerelements schließt bündig mit einer Oberfläche des Temperaturausdehnungsausgleichskörpers ab.

Die vorliegende Erfindung stellt daher einen Ultraschallwandler bereit, der für einen Einsatz zur Strömungsmessung fluider Medien, insbesondere im Ansaugtrakt und/oder im Abgastrakt und/oder im Abgasrückführungstrakt und/oder nach einem Turbolader von Brennkraftmaschinen im Kraftfahrzeugbereich oder für den Einsatz als Umfeldsensoren, insbesondere im vorderen und/oder hinteren Stoßfänger des Fahrzeugs geeignet ist. Die Erfindung beruht wesentlich auf der Erkenntnis, dass Verbesserungen bekannter Systeme hinsichtlich der oben beschrieben Nachteile bekannter Systeme insbesondere durch eine verbesserte Aufbau- und Verbindungstechnik innerhalb des Ultraschallwandlers und insbesondere in der Verbindungsstelle zwischen Piezoelement und Impedanzanpassung erzielbar sind.

Der Begriff des piezoelektrischen Wandlerelements ist dabei weit zu fassen und umfasst beispielsweise elektrisch-akustische Wandler, welche nach elektrostatischen, magnetostriktiven, piezoelektrischen Effekten oder Kombinationen dieser Effekte arbeiten. Im Folgenden wird das piezoelektrische Wandlerelement auch kurz als Piezoelement bezeichnet.

Der Anpasskörper weist mindestens eine Anpassschicht zur Begünstigung einer Schwingungskopplung zwischen dem piezoelektrischen Wandlerelement und einem umgebenden fluiden Medium auf. Die Anpassschicht umfasst beispielsweise ein Polymermaterial, wobei das Polymermaterial durch mindestens eine der folgenden Verbindungen mit dem Temperaturausdehnungsausgleichskörper verbunden ist: eine kraftschlüssige Verbindung, wobei der Kraftschluss durch den Temperaturausdehnungsausgleichskörper bewirkt wird; eine formschlüssige Verbindung, wobei der Formschluss durch den Temperaturausdehnungsausgleichskörper bewirkt wird; eine unmittelbare, d. h. ohne Zwischenschaltung von Klebstoffen adhäsive und/oder kohäsive Verbindung zwischen einer Oberfläche des Temperaturausdehnungsausgleichskörper und einer Oberfläche des Anpasskörpers.

Ein wesentlicher Vorteil der vorliegenden Erfindung besteht darin, dass der Anpasskörper nach dem Zusammenfügen des Ultraschallwandlers über ein weiteres Verbindungselement beziehungsweise weitere Verbindungsstoffe eine Verbindung zum piezoelektrischen Wandler aufbaut. Die Verbindung ist bevorzugt von sich aus mechanisch stabil und verbessert die Einkopplung von Ultraschallsignalen in umgebende fluide Medien, wie beispielsweise Flüssigkeiten, Gase oder Gemische daraus.

Ein wesentlicher Vorteil der vorliegenden Erfindung besteht darin, dass der Anpasskörper und das piezoelektrische Wandlerelement über einen
Temperaturausdehnungsausgleichskörper aneinander gekoppelt sind. Besonders vorteilhaft ist, dass der Unterschied in dem Wärmeausdehnungskoeffizient zwischen dem Material, welches für den Anpasskörper verwendet wird, und dem Material, welches für das piezoelektrische Wandlerelement verwendet wird, einen geringen Einfluss auf die Haltbarkeit des Ultraschall-Wandlerkerns ausübt. Hierdurch können bei Auswahl der geeigneten Materialien für den Anpasskörper weitere Faktoren stärker berücksichtigt werden als bisher, insbesondere die Verarbeitbarkeit, Herstellbarkeit, Wärmeleitfähigkeit, Dehnbarkeit, Festigkeit und Beständigkeit des Anpasskörpers, da nunmehr eine Vielzahl von Stoffen für den Einsatz in dem Anpasskörper geeignet sind.

Der Temperaturausdehnungsausgleichskörper minimiert insbesondere die durch Unterschiede im Wärmeausdehnungskoeffizienten entstehende Zugspannungen und Dehnungen und vermeidet idealerweise oder minimiert zumindest erheblich von Temperaturwechseln hervorgerufene Risse im Anpasskörper oder Abhebungen des Anpasskörpers vom piezoelektrischen Wandlerelement.

Gemäß einem weiteren Aspekt der Erfindung wird ein Verfahren zur Herstellung eines Ultraschall-Wandlerkerns bereit gestellt, umfassend mindestens ein piezoelektrisches Wandlerelement und mindestens einen Anpasskörper zur Begünstigung einer Schwingungskopplung zwischen dem piezoelektrischen Wandlerelement und einem umgebenden Medium und mindestens einen Temperaturausdehnungsausgleichskörper mit den folgenden Schritten:
- Einlegen des piezoelektrischen Wandlerelements in ein Formwerkzeug,
- Einlegen des Anpasskörpers in das Formwerkzeug,
- Einbringen einer Formmasse in das Formwerkzeug, so dass die Formmasse mit dem Anpasskörper und dem piezoelektrischen Wandlerelement eine kraftschlüssige Verbindung, eine chemische Bindung und/oder eine formschlüssige Verbindung eingeht und
- Aushärten der Formmasse zur Ausbildung des

Temperaturausdehnungsausgleichskörpers Das piezoelektrische Wandlerelement wird in den Temperaturausdehnungsausgleichskörper geformt, so dass eine dem Anpasskörper abgewandte Seite des piezoelektrischen Wandlerelements bündig mit einer Oberfläche des Temperaturausdehnungsausgleichskörpers abschließt.

Gemäß dem erfindungsgemäßen Verfahren zur Herstellung eines Ultraschall-Wandlerkerns werden eine Piezokeramik und ein bevorzugt als ein Festkörper ausgebildeter Anpasskörper in ein Formwerkzeug, beispielsweise eine Spritzgussform oder in eine Vergussform, eingelegt und mittels einer Formmasse, die zwischen die beiden Bauteile in die Spritzgussform eingespritzt oder in die Vergussform vergossen wird, in einem einzigen Arbeitsgang miteinander verbunden. Ein arbeits- und zeitaufwändiges Aufkleben der Piezokeramik auf einer Halterung, wie sie aus dem Stand der Technik bekannt ist, ist daher nicht mehr nötig. Dadurch werden die nötigen Arbeitsschritte reduziert, die zur Herstellung des Ultraschall-Wandlerkerns nötig sind. Insbesondere kann dadurch die Montagezeit eingespart werden und die Kosten einer Fertigung eines derartigen Ultraschall-Wandlerkerns können gesenkt werden.

Durch den Wegfall der Klebung kann die Verbindung zwischen dem Piezoelement und der Anpassschicht außerdem so gestaltet werden, dass sich einerseits eine gute akustische Kopplung einstellt und andererseits eine geringere Alterung des Piezoelements ergibt, die insbesondere durch hohe thermische Belastungen und die entsprechenden mechanischen Verspannungen an der Verbindungsstelle hervorgerufen wird.

### Kurze Beschreibung der Zeichnungen

Nicht erfindungsgemäße Beispiele und ein Ausführungsbeispiel der Erfindung sind in den Zeichnungen dargestellt und in der nachfolgenden Beschreibung näher erläutert. Es zeigen
- Fig. 1: einen bekannten Ultraschallwandler mit einem geklebten piezoelektrischen Wandlerelement in Draufsicht;
- Fig. 2: den Ultraschallwandler aus Fig. 1 in Schnittansicht;
- Fig. 3: ein Beispiel eines nicht erfindungsgemäßen Ultraschallwandlers mit einem teilweise eingebetteten piezoelektrischen Wandlerelement in Draufsicht;
- Fig. 4: das Beispiel gemäß Fig. 3 in Schnittansicht von der Seite;
- Fig. 5: ein Ausführungsbeispiel eines erfindungsgemäßen Ultraschallwandlers mit einem vollständig eingebetteten piezoelektrischem Wandlerelement;
- Fig. 6: das Ausführungsbeispiel gemäß Fig. 5 in Schnittansicht von der Seite.

### Ausführungsformen der Erfindung

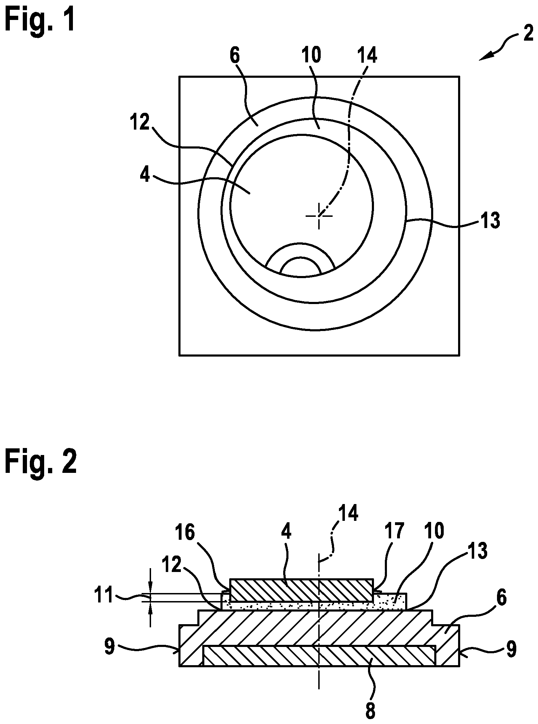

Der in den Fig. 1 und 2 dargestellte Ultraschallwandler 2 umfasst ein piezoelektrisches Wandlerelement 4 und einen Anpasskörper 8. Zwischen dem Anpasskörper 8 und dem Piezoelement 4 ist eine Klebeschicht 10 eingebracht.

Als primäres elektrisch-mechanisches Wandlungsprinzip wird in Ultraschallwandlern 2 z. B. der elektrostatische, magnetostriktive, oder piezoelektrische Effekt ausgenutzt. Bei einer Piezokeramik als primärem Wandlerelement ergeben sich unterschiedliche resonante Schwingungsmoden, die je nach Geometrie mehr oder weniger ausgeprägt sind, beziehungsweise untereinander unterschiedlich ge- oder entkoppelt sind. Bei einfachen quaderförmigen oder zylindrischen Geometrien ergeben sich vor allem die folgenden Schwingungsmoden, die alle zumindest prinzipiell zur Ultraschallwandlung eingesetzt werden können:
- Dickenschwingung einer dünnen Piezoscheibe, wobei eine reine Ausprägung dieser Schwingungsmode insbesondere dann auftritt, wenn der Durchmesser der Piezoscheibe grösser ist als das Zehnfache der Dicke der Piezoscheibe;
- Planarschwingung einer dünnen Piezoscheibe, wobei eine reine Ausprägung dieser Schwingungsmode insbesondere dann auftritt, wenn der Durchmesser der Piezoscheibe grösser ist als das Zehnfache der Dicke der Piezoscheibe;
- Längsschwingung eines Piezozylinders longitudinal, wobei eine reine Ausprägung dieser Schwingungsmode insbesondere dann auftritt, wenn der Durchmesser des Piezozylinders kleiner ist als die Länge des Piezozylinders dividiert durch 2,5;
- Scherschwingung, wobei eine reine Ausprägung dieser Schwingungsmode insbesondere dann auftritt, wenn die Kantenlänge einer Piezoscheibe in einer Dimension grösser ist als das 3,5-fache der Dicke oder der Breite der Piezoscheibe;
- Längsschwingung transversal, wobei eine reine Ausprägung dieser Schwingungsmode insbesondere dann auftritt, wenn die Dicke oder die Breite der Piezoscheibe kleiner ist als die Kantenlänge, dividiert durch 5.

Für die einzelnen Schwingungsformen existieren jeweils unterschiedliche, materialabhängige Frequenzkonstanten, aus denen sich wie z. B. für die planar schwingende Scheibe die Resonanzfrequenz als f = Np/D berechnen lässt, wobei mit D die Dicke bezeichnet ist und Np in der Größenordnung von 2000 Hzm liegt. Als Piezomaterial kommen für breitbandige Luftultraschallwandler insbesondere "weiche" Keramiken mit niedriger mechanischer Güte Qm in Frage, wobei eine Größenordnung ca. Qm = 70 sein kann, weil sich in diesem Fall eine kürzeres Ein- und Ausschwingen realisieren lässt und der Impedanzunterschied zur Luft bereits etwas reduziert ist. Andererseits wird eine möglichst große elektromechanische Kopplung benötigt. Für Ultraschallwandler im Automobilbereich sollte insbesondere für Motoranbaubedingungen die Curie-Temperatur möglichst hoch sein. Eine häufig verwendete Keramik-Klasse mit diesen Eigenschaften ist z. B. die so genannte "Navy Type II"-Klasse, z. B. eine PZT5A-Keramik oder eine Keramik gemäß EN 50324-1 Typ 200.

Abweichend von den genannten Geometrieverhältnissen, die beim einzelnen Piezoelement 4 zu den oben beschriebenen reinen Schwingungsformen führen, können im Gesamtwandlerverbund andere Geometrien vorteilhaft sein.

Um die akustische Kopplung zwischen dem Piezoelement 4 und dem fluiden Medium zu verbessern, werden Maßnahmen zur Impedanzanpassung eingesetzt, was symbolisch mit "Anpassschicht" 8 bezeichnet sein kann. Insbesondere Gase haben eine sehr viel geringere akustische Impedanz als Piezokeramik, so dass, wie oben beschrieben, im Piezoelement erzeugte Schwingungen an der Grenzfläche Piezoelements/Gas in das Piezoelement zurückreflektiert werden.

Aus dem Stand der Technik sind unter anderem zwei unterschiedliche Grundansätze zur Impedanzanpassung bekannt. Bei einem ersten Konzept wird zur Anpassung als Element 8 eine Membran verwendet, auf die das meist dünne Piezoelement 4 aufgeklebt ist. Derartige Konzepte werden beispielsweise in Piezosummern oder in Lautsprechern oder in räumlich breit abstrahlenden Abstandssensoren eingesetzt. In diesem Fall wird die Resonanzfrequenz jedoch eher durch die Membran bestimmt als durch das Piezoelement 4 allein. Bereits eine geringe radiale Ausdehnung oder eine leichte Verbiegung des Piezoelements 4 mit Piezotypisch hoher Kraft führt aber zu einer starken Membrandurchbiegung, die zwar keine große Kraft ausüben kann, aber die leichten Gasmoleküle gut verdrängt, so dass sich eine sehr effektive Ultraschalleinkopplung in das Gas ergibt.

In einem weiteren bekannten Konzept, welches auch auf die Erfindung anwendbar ist, wird als Element 8 eine so genannte "A/4-Anpassungsschicht" zwischen dem Piezoelement 4 und dem fluiden Medium verwendet. Für den theoretischen Idealfall ebener monospektraler Wellen ergäbe sich eine Energietransmission von 100% vom Piezoelement in das Gas, falls die akustische Impedanz Z = c^{∗}ρ, wobei c die Schallgeschwindigkeit und ρ die Dichte bezeichnen, des Anpassschichtmaterials 8 das geometrische Mittel der Impedanzen von Piezoelement und Gas wäre und dabei die Dicke der Anpassschicht einer viertel Wellenlänge (λ/4) der Ultraschallwellen in der Anpassschicht 8 entspricht. Für LuftUltraschallwandler 2 auf Basis eines Piezoelements 4, d. h. mit typischen Piezokeramiken, Luft als zu messendem Medium und typischen Schallgeschwindigkeiten in Feststoffen ergeben sich jedoch für die Dichte D der Anpassschicht 8 in vielen Fällen unrealistisch niedrige Werte, die sich zumeist nur mit wenig robusten Werkstoffen erzielen lassen.

Mit realen und robusten Werkstoffen lassen sich aber dennoch Verbesserungen des Übertragungsverhaltens erzielen, auch wenn keine vollständige Impedanzanpassung erreicht wird. Beispielsweise werden hierzu Epoxid- oder Polyesterharze mit beigemengten Glashohlkugeln verwendet, welche die Dichte ρ reduzieren. Abweichungen von einer rein rechnerischen λ/4-Schichtdicke können vorteilhaft sein, z. B. um eine Frequenzverschiebung des Piezoelements 4 aufgrund der mechanisch/akustischen Belastung auszugleichen, um die Abweichung von der Bedingung ebener Wellen zu kompensieren oder um die Übertragungs-Bandbreite des Ultraschallwandlers 2 zu beeinflussen.

Ebenfalls bekannt sind weitere Geometrievarianten, wie beispielsweise Anpassschichten 8, welche breiter sind als das Piezoelement 4, Anpassschichten 8, welche topfförmig ausgebildet sind, Anpassschichten 8 mit Fasern an den abstrahlenden Oberflächen oder ähnliche Varianten. Diese Geometrievarianten, welche auch im Rahmen der vorliegenden Erfindung eingesetzt werden können, haben meist ein optimiertes Schwingungs- oder Abstrahlverhalten des Ultraschallwandlers 2 zum Ziel. In speziellen Anwendungen, in denen es z. B. um eine sehr effiziente oder sehr breitbandige Ultraschalleinkopplung geht, werden darüber hinaus auch Ultraschallwandler 2 mit mehreren übereinander liegenden Anpassschichten 8 unterschiedlicher Schallimpedanz eingesetzt, was auch im Rahmen der vorliegenden Erfindung möglich ist.

Neben der nahe liegenden Wandlergeometrie mit einem in Dickenrichtung schwingenden Piezoelement 4 und einer als λ/4-Schicht ausgebildeten Anpassschicht 8 ist auch die Verwendung der Planar-Resonanz in Verbindung mit einer λ/4-Anpassschicht bekannt und im Rahmen der Erfindung anwendbar. In diesem Fall können sowohl die planaren Schwingungsanteile in die Anpassschicht 8 eingekoppelt werden als auch die Dickenschwingungsanteile, die sich durch Querkontraktion des Piezoelements 4 ergeben. Durch diesen Ansatz kann bei einer fest vorgegebenen Ultraschallfrequenz die Dicke des Piezoelements deutlich reduziert werden, weil diese Abmessung nicht mehr primär frequenzbestimmend ist.

Gemäß dem Stand der Technik wird die Impedanzanpassungsschicht 8 bei einem LuftUltraschallwandler 2 separat gefertigt. Häufig wird dazu ein mit Glashohlkugeln gefülltes Epoxid- oder Polyesterharz eingesetzt, welches in eine Form gebracht und ausgehärtet wird. Durch anschließende spanende Bearbeitung wird dann die gewünschte Detailgeometrie erzielt, bevor das Piezoelement 4 mit einem separat aufgetragenen Klebstoff 10 aufgeklebt wird.

Der in Fig. 2 dargestellte Ultraschall-Wandlerkern umfasst beispielsweise außerdem einen Temperaturausdehnungsausgleichskörper 6 und wurde mit den folgenden Schritten gefertigt:
- Einlegen des Anpasskörpers 8 in ein Formwerkzeug,
- Umgießen oder Umspritzen des Anpasskörpers 8 mit gleichzeitigem oder darauf folgendem Aufformen eines Temperaturausdehnungsausgleichskörpers 6,
- Verteilen eines Klebstoffs 10 auf den geformten Temperaturausdehnungsausgleichskörper 6,
- Aufsetzen des Piezoelements 4 auf den Klebstoff 10 und
- Aushärten der Anordnung unter definiertem Druck in einem Aushärteofen für ca. 1 Stunde.

Beim Aufsetzen des Piezoelements 4 auf den Kleber 10 versinkt das Piezoelement 4 um eine Einsinktiefe 11 in den Klebstoff 10. Nachteilig daran ist insbesondere, dass das Piezoelement 4 nach dem Aufsetzen auf dem Klebstoff 10 vor und während des Aushärtens aus einer mittigen Lage 14 wegdriften kann. Zum einen besteht die Möglichkeit, dass der Kleber 10 nicht zentral auf den Temperaturausdehnungsausgleichskörper 6 aufgesetzt wird, so dass gegenüberliegende Ansatzkanten 12, 13 des Klebstoffs 10 unterschiedlich weit von einem Rand 9 des Temperaturausdehnungsausgleichskörpers 6 beabstandet sind. Zum anderen kommt es leicht dazu, dass das Piezoelement 4 im noch nicht ausgehärteten Klebstoff 10 wegdriftet, so dass gegenüberliegende Kanten 16, 17 des Piezoelements 4 im Klebstoff 10 unterschiedlich weit von den Ansatzkanten 12, 13 des Klebstoffs 10 beabstandet sein können.

Der Klebstoff 10 ist als Verbindung zwischen dem Piezoelement 4 und der Anpassschicht 8 außerdem hinsichtlich der Kombination aus akustischen und mechanisch/thermischen Anforderungen besonders kritisch. Diese Problematik kann mit den Maßnahmen der Erfindung entschärft werden, indem kein separater Klebstoff verwendet wird.

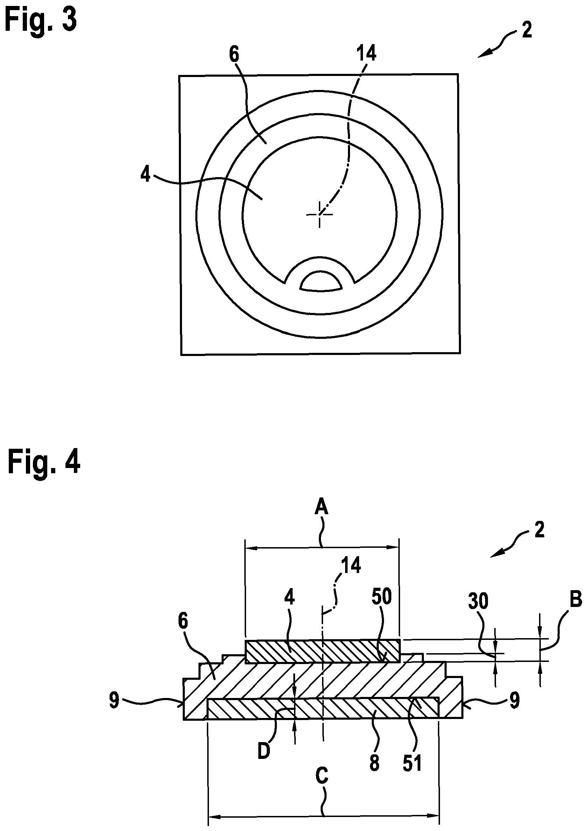

Fig. 3 zeigt ein Beispiel eines nicht erfindungsgemäßen Ultraschallwandlers 2 mit einem teilweise in einen thermischen Anpasskörper 6 eingebetteten piezoelektrischen Wandlerelement 4 in Draufsicht. Durch das nicht erfindungsgemäße Herstellungsverfahren ist gewährleistet, dass das Piezoelement 4 in einer Mitte 14 des Temperaturausdehnungsausgleichskörpers 6 angeordnet ist, insbesondere in einer Mitte 14 des aus dieser Darstellung nicht sichtbaren Anpasskörpers 8.

Fig. 4 zeigt eine Schnittdarstellung der Beispielform gemäß Fig. 3 von der Seite. Zwischen dem Piezoelement 4 und dem Anpasskörper 8 ist ein Temperaturausdehnungsausgleichskörper 6 eingebracht. Der Temperaturausdehnungsausgleichskörper 6 weist eine erste Grenzfläche 50 mit dem piezoelektrischen Wandlerelement 4 und eine zweite Grenzfläche 51 mit dem Anpasskörper 8 auf. Somit ist der Temperaturausdehnungsausgleichskörper 6 dazu geeignet, bei Temperaturveränderungen die entsprechenden mechanischen Verspannungen zwischen dem piezoelektrischen Wandlerelement 4 und dem Anpasskörper 8 auszugleichen. Das Piezoelement 4 weist einen im Wesentlichen einheitlichen Abstand zu dem Rand 9 des Temperaturausdehnungsausgleichskörpers 6 auf.

Der Ultraschall-Wandlerkern 2 wurde beispielsweise mit den folgenden Schritten hergestellt:
- Einlegen des piezoelektrischen Wandlerelements 4 in ein Formwerkzeug,
- Einlegen des Anpasskörpers 8 in das Formwerkzeug,
- Einbringen einer Formmasse in das Formwerkzeug, so dass die Formmasse mit dem Anpasskörper 8 und dem piezoelektrischen Wandlerelement 4 eine kraftschlüssige Verbindung, eine chemische Bindung und/oder eine formschlüssige Verbindung eingeht und
- Aushärten der Formmasse zur Ausbildung des Temperaturausdehnungsausgleichskörpers 6.

Das piezoelektrische Wandlerelement 4 wird so auf den Temperaturausdehnungsausgleichskörper geformt, dass das piezoelektrische Wandlerelement 4 zwischen 1% und 99%, bevorzugt zwischen 5% und 50%, besonders bevorzugt zwischen 10% und 30% in den Temperaturausdehnungsausgleichskörper 6 versenkt ist. Die Einbettungstiefe 30 des Piezoelements 4 ist so ausgelegt, dass die Anforderungen an die Lebensdauer, d.h. an die Festigkeit der Verbindung, und an die gewünschte Schallamplitude erfüllt werden. Bei einer kleinen Einbettungstiefe 30 werden hohe Schallamplituden erreicht. Bei einer großen Einbettungstiefe 30 ist die Festigkeit der Verbindung erhöht. Die Einbettungstiefe 30 ist bevorzugt in Abhängigkeit der Spezifikation festgelegt. Eine Einbettungstiefe von 10% bis 30% stellt in der Praxis einen optimalen Kompromiss von Lebensdauer und Schallamplitude dar. Je nach Ausführungsform kann also eine geringe Einbettung mit einem Meniskus von beispielsweise 1%, 10% oder 20% einer Scheibendicke B des Piezoelements 4 bis zu einer Tiefeinbettung mit einem Meniskus in Höhe von 50% bis 99%, insbesondere 80% der Scheibendicke B des Piezoelements 4 vorgesehen sein. Bevorzugt sind Einbettungstiefen 30, bei welchen die Amplitude des Ultraschall-Wandlerkerns 2 mindestens so hoch ist wie bei geklebten Ultraschall-Wandlerkernen aus dem Stand der Technik. Der Ultraschall-Wandlerkern 2 zeichnet sich aufgrund der Eignung, mechanische Verspannungen zwischen dem piezoelektrischen Wandlerelement 4 und dem Anpasskörper 8 ausgleichen zu können, durch eine thermische Beständigkeit insbesondere bei Temperaturwechseln aus.

Bevorzugt wird die Formmasse in zylindrischer Tablettenform zusammen mit den weiteren Einlegeteilen, nämlich dem Piezoelement 4 und dem Anpasskörper 8 in eine Formmaschine mit einem Formwerkzeug gelegt. Das Formwerkzeug ist beheizt und schmilzt die Formmasse. Diese wird über einen Stempel in die Form gedrückt. Nachdem die Formmasse teilvernetzt ist, werden die Teile entformt und anschließend in einem Ofenprozess vollvernetzt.

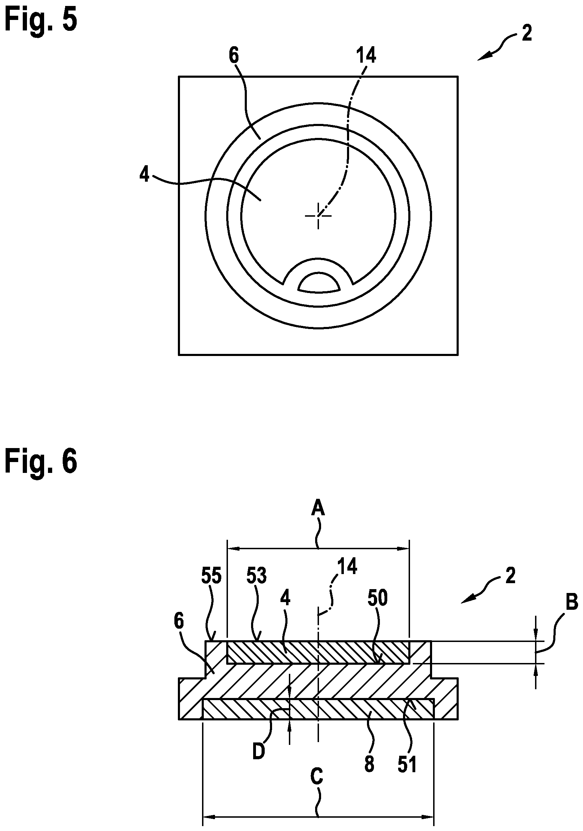

In den Fig. 5 und 6 ist ein Ausführungsbeispiel mit einem vollständig in einen Temperaturausdehnungsausgleichskörper 6 eingebetteten piezoelektrischen Wandlerelement 4 dargestellt. Hierbei ist das piezoelektrische Wandlerelement 4 so in den Temperaturausdehnungsausgleichskörper 6 geformt, so dass eine dem Anpasskörper 8 abgewandte Seite 53 des piezoelektrischen Wandlerelements 4 bündig mit einer Oberfläche 55 des Temperaturausdehnungsausgleichskörpers 6 abschließt. Durch das erfindungsgemäße Herstellungsverfahren ist wiederum gewährleistet, dass das Piezoelement 4 in einer Mitte 14 des Ultraschall-Wandlerkerns 2 angeordnet ist, insbesondere in einer Mitte 14 des Anpasskörpers 8. Wie aus der seitlichen Schnittansicht ersichtlich, ist der Temperaturausdehnungsausgleichskörper 6 zwischen dem piezoelektrischen Wandlerelement 4 und dem Anpasskörper 8 eingebracht und weist jeweils eine Grenzfläche 50, 51 mit dem piezoelektrischen Wandlerelement 4 und dem Anpasskörper 8 auf. Das Piezoelement 4 ist hier über dessen gesamte Dicke 32 von dem Temperaturausdehnungsausgleichskörper 6 umgeben.

Die dargestellten piezoelektrischen Wandlerelemente 4 weisen zylindrische Piezokeramikscheiben mit einem Scheibendurchmesser A und einer Scheibendicke B auf. Vorzugsweise werden beispielsweise für Strömungsmessungen im Ansaugtrakt und/oder Abgastrakt, bzw. im Abgasrückführtrakt von Brennkraftmaschinen Piezoelemente 4 mit einem Durchmesser A zwischen ca. 5 mm und ca. 20 mm eingesetzt. Typische und bevorzugte Dicken B liegen zwischen 0,08 *A und 0,7* A. Auch andere Piezogeometrien sowie andere Arten von Piezoelementen, z. B. PZT-Composites oder PZT-Stacks, sind jedoch einsetzbar.

Für Anwendungen mit Luftultraschall eignen sich eher niedrigere Frequenzen der Größenordnung < ca. 500 kHz, da mit zunehmender Frequenz und/oder zunehmender Luftfeuchte die Absorption des Schalls in der Luft ansteigt. Für Anwendungen, die eine hohe Zeitmessgenauigkeit erfordern, eignen sich dagegen eher möglichst hohe Frequenzen. Andererseits ist zu beachten, dass bei einem großen Strömungs-Messbereich zeitliche Verschiebungen über mehrere Ultraschallperioden auftreten: Deshalb sollte bei begrenzter Bandbreite der Ultraschallwandler 2 die Frequenz nur so hoch sein, dass eine Phasen- oder Nulldurchgangsmessung noch eindeutig der richtigen Ultraschallschwingungsperiode zugeordnet werden kann. Zusätzlich sollte ein ausreichender Frequenzabstand zu Schüttelbeanspruchungen und Körperschall-Störquellen eingehalten werden, die meist im niederfrequenteren Bereich liegen.

Insgesamt stellt für eine Strömungsmessung der Ansaugluft in einer Brennkraftmaschine im Kraftfahrzeugbereich der Frequenzbereich von ca. 100 kHz bis ca. 400 kHz einen sinnvollen Kompromiss dar. Je nach Auswertungsverfahren und Messgeometrie ist insbesondere ein eingeschränkter Bereich z. B. zwischen 170 kHz und 250 kHz besonders vorteilhaft. Für weitere Anwendungen ist die Erfindung jedoch grundsätzlich auch auf andere Frequenzbereiche übertragbar. Derartige Frequenzbereiche sind mit verschiedenen Piezomaterialien, beispielsweise mit PZT-Keramiken oder anderen keramischen Piezomaterialien, erreichbar.

Um Frequenzen im zuvor genannten Zielbereich mit einer Piezokeramik zu erzeugen, kommen prinzipiell die oben beschriebenen Geometrien und Schwingungsmoden in Frage. Wird gleichzeitig eine größere Apertur des Ultraschallwandlers 2 gewünscht, dann wird vorzugsweise der Durchmesser A so gewählt, dass sich die gewünschte Ultraschallfrequenz in etwa als Radial-Resonanz oder Planarschwingung des reinen Piezoelements 4 ergibt. Die Dicke B wird vorzugsweise so gewählt, dass sich einerseits keine ungünstigen Kopplungen unterschiedlicher Schwingungsmoden ergeben und andererseits keine zu starke Durchbiegung der Keramik infolge thermischer Verspannungen mit einer aufgebrachten Anpassschicht 8 zur Impedanzanpassung einstellt.

Die Anpassschicht 8 besitzt sinnvollerweise vorzugsweise einen ähnlichen Durchmesser C wie das piezoelektrische Element 4. Bewährt haben sich dabei Durchmesser, die etwas grösser gewählt sind als derjenige des Piezoelements 4. Die Dicke D der Anpassschicht wird vorzugsweise in etwa auf ein Viertel der Wellenlänge des Ultraschalls gemäß der Schallgeschwindigkeit im Werkstoff der Anpassschicht 8 eingestellt.

Durch Kopplung der Anpassschicht 8 an das Piezoelement 4 ändert sich die tatsächliche Resonanzfrequenz des Ultraschallwandlers 2, so dass die Dicke D der Anpassschicht 8 auf die entsprechend verschobene Wellenlänge einzustellen ist. Eine weitere Feinanpassung der Dicke D ist sinnvoll, wenn z. B. die Ultraschallamplitude, die Ultraschallbandbreite oder der entsprechende Schwingungsverlauf optimiert werden soll. Der Werkstoff der Anpassschicht 8 ist so gewählt, dass die Schwingungskopplung zwischen Piezoelement 4 und dem fluiden Medium, z. B. Luft, begünstigt wird. Hierzu ist eine nicht zu hohe Eigendämpfung in Verbindung mit einer geeigneten Schallimpedanz erforderlich. Die Schallimpedanz muss nicht zwingend im geometrischen Mittel zwischen der Impedanz der Piezokeramik und derjenigen der Luft liegen. Durch Impedanzen im Bereich von z. B. 0,5 MRayl bis 1,5 MRayl sind brauchbare Amplituden bei günstiger Wandler-Bandbreite erzielbar.

Der Anpasskörper 8 wird bevorzugt aus einem hochtemperaturbeständigen Kunststoff gefertigt, insbesondere aus einem Hochleistungsthermoplast, besonders bevorzugt aus einem Polyetherimid (PEI). Bevorzugt wird ein gesintertes Material, insbesondere gesintertes PEI, zum Beispiel erhältlich als Vespel®, mit einer geringen Dichte verwendet.

Der Temperaturausdehnungsausgleichskörper 6 wird bevorzugt aus einer thermoplastischen oder aus einer duroplastischen Formmasse oder Vergussmasse oder aus einem sogenannten Hotmelt gefertigt. Wesentlich ist, dass die Formmasse in flüssigem oder verformbarem Zustand in einem Formwerkzeug, beispielsweise in einer Spritzgussform oder in einer Vergussform, geformt werden kann. Bevorzugt umfasst die Formmasse eine Duroplastmasse auf Epoxybasis mit ca. 80% Glasfaseranteil.

Weiterhin kann dem Ultraschallwandler 2 nach der Erfindung auch eine elektrische Kontaktierung des Piezoelements 4 über Elektroden und Zuleitungen zugeordnet sein, welche in den Figuren nicht dargestellt ist. Stand der Technik sind unterschiedlichste Elektrodenformen auf der Piezooberfläche. Bei zylindrischen Piezokeramiken sind häufig die beiden ebenen Flächen metallisiert, beispielsweise mittels einer Dickschichtpaste oder mittels gesputterter Dünnschichten, wobei auch Kombinationen mehrerer Techniken möglich sind. Zur einseitigen Kontaktierung kommen auch herumgezogene Elektroden zum Einsatz, welche in mehreren Ausführungen von kommerziell erhältlichen Piezoelementen 4 bekannt sind. Als Kontaktierungsverfahren dient meist Löten, Leitkleben oder Thermokompressionsschweißen. Alternativ kann ein elektrisch leitfähiges Anschlusselement mit Vorspannung auf das Piezoelement gedrückt werden, wobei ein Andruck z. B. über eine Verstemmung, eine Feder oder eine Schraube erreicht werden kann.

Ebenso gibt es Piezokeramiken, die zwar elektrisch polarisiert sind, aber selbst keine Elektrode besitzen. In diesem Fall kann eine separate Elektrode, z. B. eine Metallfolie, ein Metallplättchen, ein Metallring, ein Metallnetz oder ähnliche Elemente oder Kombinationen dieser Elemente, die bereits Teil der weiteren Kontaktierung sein kann, beispielsweise mittels einer Vorspannung, mittels eines Klebstoff oder mittels eines Leitklebers oder Kombinationen dieser Techniken auf die Oberfläche des Piezoelements aufgebracht werden.

Neben den in den Figuren dargestellten Elementen kann der Ultraschallwandler 2 nach der Erfindung noch weitere Elemente umfassen, die in den Figuren nicht dargestellt sind. So ist es insbesondere bevorzugt, wenn Dämpfungselemente vorgesehen sind, mittels derer die Schwingungen des Piezoelements gedämpft werden können. Beispielsweise kann zu diesem Zweck ein Dämpfungselement rückseitig, d. h. auf der der Anpassschicht 8 abgewandten Seite, und/oder auch an anderen Stellen, beispielsweise umfangsseitig das Piezoelement zumindest teilweise umgebend in Kontakt mit dem Piezoelement 4 vorgesehen sein. Dieses Dämpfungselement, was oft auch als "Backing" bezeichnet wird, kann dementsprechend beispielsweise als Dämpfungsschicht und/oder als Dämpfungsverguss ausgestaltet sein, und/oder als separates Dämpfungselement. Als Materialien kommen beispielsweise Silikon-artige Stoffe in Betracht sowie andere Dämpfungsmaterialien, wie beispielsweise Schmelzkleber. Auch Füllstoffe können enthalten sein, beispielsweise Glashohlkugeln, Kunststoffkugeln, Kunststoffhohlkugeln, Glasmehl oder ähnliche Füllstoffe oder Mischungen davon, welche insbesondere Schall in Wärme umwandeln können.

## Patentansprüche

1. Verfahren zur Herstellung eines Ultraschall-Wandlerkerns (2), umfassend mindestens ein piezoelektrisches Wandlerelement (4) und mindestens einen Anpasskörper (8) zur Begünstigung einer Schwingungskopplung zwischen dem piezoelektrischen Wandlerelement (4) und einem umgebenden Medium und mindestens einen Temperaturausdehnungsausgleichskörper (6) mit den folgenden Schritten:
- Einlegen des piezoelektrischen Wandlerelements (4) in ein Formwerkzeug,
- Einlegen des Anpasskörpers (8) in das Formwerkzeug,
- Einbringen einer Formmasse zwischen dem piezoelektrischenWandlerelement (4) und dem Anpasskörper (8) in das Formwerkzeug, so dass die Formmasse mit dem Anpasskörper (8) und dem piezoelektrischen Wandlerelement (4) eine kraftschlüssige Verbindung, eine chemische Bindung und/oder eine formschlüssige Verbindung eingeht und
- Aushärten der Formmasse zur Ausbildung des Temperaturausdehnungsausgleichskörpers (6),
**dadurch gekennzeichnet, dass** das piezoelektrische Wandlerelement (4) in den Temperaturausdehnungsausgleichskörper (6) geformt wird, so dass eine dem Anpasskörper (8) abgewandte Seite (53) des piezoelektrischen Wandlerelements (4) bündig mit einer Oberfläche (55) des Temperaturausdehnungsausgleichskörpers (6) abschließt.

2. Verfahren Anspruch 1, **dadurch gekennzeichnet, dass** der Anpasskörper (8) beim Einlegen in das Formwerkzeug ein Festkörper ist.

3. Ultraschall-Wandlerkern (2), insbesondere hergestellt nach einem der Verfahren nach einem der Ansprüche 1 oder 2, umfassend mindestens ein piezoelektrisches Wandlerelement (4) und mindestens einen Anpasskörper (8) zur Begünstigung einer Schwingungskopplung zwischen dem piezoelektrischen Wandlerelement (4) und einem umgebenden Medium, wobei Der Ultraschall-Wandlerkern (4) mindestens einen Temperaturausdehnungsausgleichskörper (6) aufweist, welcher zumindest eine gemeinsame Grenzfläche (50) mit dem piezoelektrischen Wandlerelement (4) und zumindest eine gemeinsame Grenzfläche (51) mit dem Anpasskörper (8) aufweist, wobei der Temperaturausdehnungsausgleichskörper (6) zwischen dem piezoelektrischen Wandlerelement (4) und dem Anpasskörper (8) eingebracht ist, und **dadurch gekennzeichnet, dass** eine dem Anpasskörper(8) abgewandte Seite (53) des piezoelektrischen Wandlerelements (4) bündig mit einer Oberfläche (55) des Temperaturausdehnungsausgleichskörpers (6) abschließt.

4. Ultraschall-Wandlerkern (2) nach Anspruch 3, **dadurch gekennzeichnet, dass** der Temperaturausdehnungsausgleichskörper (6) aus einer duroplastischen Formmasse gefertigt ist.

5. Ultraschall-Wandlerkern '(2) nach Anspruch 3 oder 4, **dadurch gekennzeichnet, dass** der Anpasskörper (8) aus einem hochtemperaturbeständigen Kunststoff gefertigt ist.

6. Ultraschall-Wandlerkern (2) nach einem der Ansprüche 3 bis 5, **dadurch gekennzeichnet, dass** der Anpasskörper (8) aus einem Hochleistungsthermoplast gefertigt ist.

7. Ultraschall-Wandlerkern (2) nach einem der Ansprüche 3 bis 6, **dadurch gekennzeichnet, dass** der Anpasskörper (8) aus einem Polyetherimid gefertigt ist.

8. Ultraschall-Wandlerkern (2) nach einem der Ansprüche 3 bis 7, **dadurch gekennzeichnet, dass** der Anpasskörper (8) aus einem gesinterten Material gefertigt ist.

## Claims

1. Method for producing an ultrasonic transducer core (2), comprising at least one piezoelectric transducer element (4) and at least one matching body (8) for promoting an oscillation coupling between the piezoelectric transducer element (4) and a surrounding medium, and at least one thermal expansion compensating body (6), comprising the following steps:
- inserting the piezoelectric transducer element (4) into a moulding tool,
- inserting the matching body (8) into the moulding tool,
- introducing a moulding compound between the piezoelectric transducer element (4) and the matching body (8) into the moulding tool, such that the moulding compound forms a force-locking connection, a chemical bond and/or a positively locking connection with the matching body (8) and the piezoelectric transducer element (4), and
- curing the moulding compound in order to form the thermal expansion compensating body (6),
**characterized in that** the piezoelectric transducer element (4) is moulded into the thermal expansion compensating body (6), such that a side (53) of the piezoelectric transducer element (4) facing away from the matching body (8) terminates flush with a surface (55) of the thermal expansion compensating body (6).

2. Method according to Claim 1, **characterized in that** the matching body (8) is a solid body upon being inserted into the moulding tool.

3. Ultrasonic transducer core (2), in particular produced according to one of the methods according to either of Claims 1 and 2, comprising at least one piezoelectric transducer element (4) and at least one matching body (8) for promoting an oscillation coupling between the piezoelectric transducer element (4) and a surrounding medium, wherein the ultrasonic transducer core (4) has at least one thermal expansion compensating body (6) having at least one common interface (50) with the piezoelectric transducer element (4) and at least one common interface (51) with the matching body (8), wherein the thermal expansion compensating body (6) is introduced between the piezoelectric transducer element (4) and the matching body (8), and **characterized in that** a side (53) of the piezoelectric transducer element (4) facing away from the matching body (8) terminates flush with a surface (55) of the thermal expansion compensating body (6).

4. Ultrasonic transducer core (2) according to Claim 3, **characterized in that** the thermal expansion compensating body (6) is fabricated from a thermosetting plastic moulding compound.

5. Ultrasonic transducer core (2) according to Claim 3 or 4, **characterized in that** the thermal expansion compensating body (6) is fabricated from a high-temperature-resistant plastic.

6. Ultrasonic transducer core (2) according to any of Claims 3 to 5, **characterized in that** the matching body (8) is fabricated from a high-performance thermoplastic.

7. Ultrasonic transducer core (2) according to any of Claims 3 to 6, **characterized in that** the matching body (8) is fabricated from a polyether imide.

8. Ultrasonic transducer core (2) according to any of Claims 3 to 7, **characterized in that** the matching body (8) is fabricated from a sintered material.

## Revendications

1. Procédé de fabrication d'un noyau de transducteur ultrasonore (2) comprenant au moins un élément transducteur piézoélectrique (4) et au moins un corps d'adaptation (8), destiné à favoriser un couplage en vibration entre l'élément transducteur piézoélectrique (4) et un milieu environnant, et au moins un corps de compensation de dilatation thermique (6), le procédé comprenant les étapes suivantes :
- insérer l'élément transducteur piézoélectrique (4) dans un outil de formage,
- insérer le corps d'adaptation (8) dans l'outil de formage,
- introduire une matière de formage entre l'élément transducteur piézoélectrique (4) et le corps d'adaptation (8) dans l'outil de formage de sorte que la matière de formage établisse avec le corps d'adaptation (8) et l'élément transducteur piézoélectrique (4) une liaison par friction, une liaison chimique et/ou une liaison par complémentarité de formes et
- faire durcir la matière de formage pour former le corps de compensation de dilatation thermique (6),
**caractérisé en ce que** l'élément transducteur piézoélectrique (4) est formé dans le corps de compensation de dilatation de température (6) de sorte qu'un côté (53) de l'élément transducteur piézoélectrique (4), qui est opposé au corps d'adaptation (8), affleure une surface ' (55) du corps de compensation de dilatation thermique (6).

2. Procédé selon la revendication 1, **caractérisé en ce que**, lorsqu'il est inséré dans l'outil de formage, le corps d'adaptation (8) est un corps solide.

3. Noyau de transducteur à ultrasons (2), fabriqué notamment conformément à l'un des procédés selon l'une des revendications 1 ou 2, comprenant au moins un élément transducteur piézoélectrique (4) et au moins un corps d'adaptation (8) pour favoriser un couplage en vibration entre l'élément transducteur piézoélectrique (4) et un milieu environnant, le noyau de transducteur ultrasonore (4) comportant au moins un corps de compensation de dilatation de température (6) qui comporte au moins une interface commune (50) avec l'élément transducteur piézoélectrique (4) et au moins une interface commune (51) avec le corps d'adaptation (8), le corps de compensation de dilatation de température (6) étant introduit entre l'élément transducteur piézoélectrique (4) et le corps d'adaptation (8), et **caractérisé en ce qu'**un côté (53) de l'élément transducteur piézoélectrique (4), qui est opposé au corps d'adaptation (8), affleure une surface (55) du corps de compensation de dilatation thermique (6) .

4. Noyau de transducteur ultrasonore (2) selon la revendication 3, **caractérisé en ce que** le corps de compensation de dilatation de température (6) est fabriqué à partir d'une matière de formage thermodurcissable.

5. Noyau de transducteur ultrasonore (2) selon la revendication 3 ou 4, **caractérisé en ce que** le corps d'adaptation (8) est fabriqué à partir d'une matière synthétique résistant aux températures élevées.

6. Noyau de transducteur ultrasonore (2) selon l'une des revendications 3 à 5, **caractérisé en ce que** le corps d'adaptation (8) est fabriqué à partir d'un thermoplastique à haute performance.

7. Noyau de transducteur ultrasonore (2) selon l'une des revendications 3 à 6, **caractérisé en ce que** le corps d'adaptation (8) est fabriqué à partir d'un polyétherimide.

8. Noyau de transducteur ultrasonore (2) selon l'une des revendications 3 à 7, **caractérisé en ce que** le corps d'adaptation (8) est fabriqué à partir d'un matériau fritté.
